# EUROPEAN PATENT APPLICATION

(11) **EP 3 312 795 A1**
(43) Date of publication of application: **25.04.2018**
(21) Application number: 15896262.1
(22) Date of filing: 22.06.2015
(51) Int. Cl.: G06Q 50/30

(54) **TRAIN TRAFFIC CONTROL SYSTEM AND METHOD FOR MANUALLY CONTROLLING RAILWAY FACILITIES**

(71) Applicant: Hitachi, Ltd., Chiyoda-ku Tokyo 100-8280 (JP)
(72) Inventor: WADA, Makoto, Tokyo 100-8280 (JP); MASUZAWA, Hiroaki, Tokyo 100-8280 (JP); FUJISAKU, Yoshichika, Hitachi-shi Ibaraki 319-1221 (JP)
(74) Representative: MERH-IP Matias Erny Reichl Hoffmann Patentanwälte PartG mbB
(86) International application number: PCT/JP2015/067847
(87) International publication number: WO 2016/207939

(57) **Abstract**

An error prevention device stores information representing a check target control in advance, determines whether or not a control request received from a manual control device requests a check target control, and asks confirmation of the control request to the manual control device if the control request requests the check target control. The manual control device stores, in advance, data of a confirmation screen format on which a control target facility and a control content can be set, and displays a screen created by setting the control target facility and the control content of the control request in the confirmation screen format to prompt the operator to perform a confirmation manipulation for the control request if the confirmation of the control request is asked. In addition, the manual control device transmits a confirmation response to the error prevention device as the confirmation manipulation is performed. The error prevention device controls a rail field facility on the basis of the control request as the confirmation response is received.

## Description

### Technical Field

The present invention relates to a train operation control system for managing railroad train operation, and more particularly, to a technology for allowing an operator to manually control a rail field facility.

### Background Art

The train operation control system is a system that displays conditions of trains and rail field facilities and controls paths of trains and the rail field facilities. Typically, the train operation control system automatically, performs a control. However, an operator manually controls the rail field facility as necessary when a failure occurs or the like. An influence of an erroneous control is significant in some cases when an operator manually controls paths of trains or rail field facilities. Therefore, it is necessary to perform a safety check for checking whether or not there is an error in such a control. For example, the safety check is particularly necessary in a release of rail track closure, a release of a total top traffic signal phase, or the like.

In order to reliably prevent a manipulation error of an operator, it is desirable to provide the train operation control system with a structure for checking safety before the control. JP 2001-338048 A (PTL 1) discusses a technique of preventing an artificial manipulation error in the train operation control system.

PTL 1 teaches that "a pair of screens A and B are provided and are displayed alternately at a time interval of one second or longer to visualize a different part between the screens A and B in a blinking manner." In the technique of PTL 1, a pair of screens A and B are prepared on a maintenance terminal in a maintenance work, and are displayed alternately to blink a different part between the screens A and B. Such a blinking indication attracts a user' s attention to prompt a user to check it.

### Citation List

### Patent Literature

PTL 1: JP 2001-338048 A

### Summary of Invention

### Technical Problem

There are various ways of thinking regarding the safety check and error prevention in the train operation control system. For example, the way of thinking regarding the safety check and the error prevention may be different on a country or region basis. An error prevention target manipulation in the safety check is different on a station or region basis in some cases. In addition, a safety check target control may change as a result of long-term observation of the railroad operation status in some cases. For this reason, it is desirable to allow the train operation control system to easily add or change the safety check target control (hereinafter, referred to as a "check target control").

However, in PTL 1, there is no consideration on the addition or change of the check target control. If the manipulation error prevention method of PTL 1 is applied to a manual control console of the train operation control system, it is necessary to prepare a plurality of screens (screens A and B) for each check target control. For this reason, the number of dedicated screens newly created to add or change the check target control increases, and this increases cost.

In a system configuration provided with a display and manipulation input device (hereinafter, referred to as a "manual control device") and a safety check device (hereinafter, referred to as an "error prevention device"), it is necessary to handle both the manual control device and the error prevention device when a manipulation necessary to be checked is added or changed. This also increases cost.

An object of the present invention is to provide a technology for allowing an operator to easily add or change the check target control in the train operation control system having the manual control device and the error prevention device.

### Solution to Problem

According to an aspect of the invention, there is provided a train operation control system that controls a rail field facility of a railroad and allows an operator to perform a manual control, the train operation control system including: a manual control device configured to receive a manual manipulation to create a control request for controlling the rail field facility; and an error prevention device configured to check whether or not there is an error in the control request and controls the rail field facility on the basis of the control request in the case of no error. The error prevention device stores information representing a check target control in advance, determines whether or not the control request received from the manual control device requests the check target control, and asks confirmation of the control request to the manual control device if the control request requests the check target control. The manual control device stores, in advance, data of a confirmation screen format on which a control target facility and a control content can be set, displays a screen created by setting the control target facility and the control content of the control request in the confirmation screen format to prompt the operator to perform a confirmation manipulation for the control request if the confirmation of the control request is asked, and transmits a confirmation response to the error prevention device as the confirmation manipulation is performed. The error prevention device controls the rail field facility on the basis of the control request as the confirmation response is received.

### Advantageous Effects of Invention

According to the invention, the error prevention device determines whether or not the control request corresponds to a confirmation target by referring to information on the check target control stored in advance, and the manual control device allows an operator to perform confirmation using a confirmation screen format that does not depend on the control target or content. Therefore, it is possible to easily add or change the check target control only using the error prevention device.

### Brief Description of Drawings

[FIG. 1] FIG. 1 is a block diagram illustrating an exemplary configuration of a train operation control system.
[FIG. 2] FIG. 2 is a block diagram illustrating an error prevention device and a manual control console.
[FIG. 3] FIG. 3 is a block diagram illustrating an error prevention device and a manual control console.
[FIG. 4] FIG. 4 is a flowchart illustrating a process of a manual control information check processing unit.
[FIG. 5] FIG. 5 is a flowchart illustrating a confirmation response check process.
[FIG. 6] FIG. 6 is a diagram illustrating an exemplary manual control request manipulation screen displayed on a display.
[FIG. 7] FIG. 7 is a diagram illustrating an exemplary confirmation request screen displayed on a display.

### Description of Embodiments

A train operation control system according to an embodiment of the invention will be described with reference to the accompanying drawings.

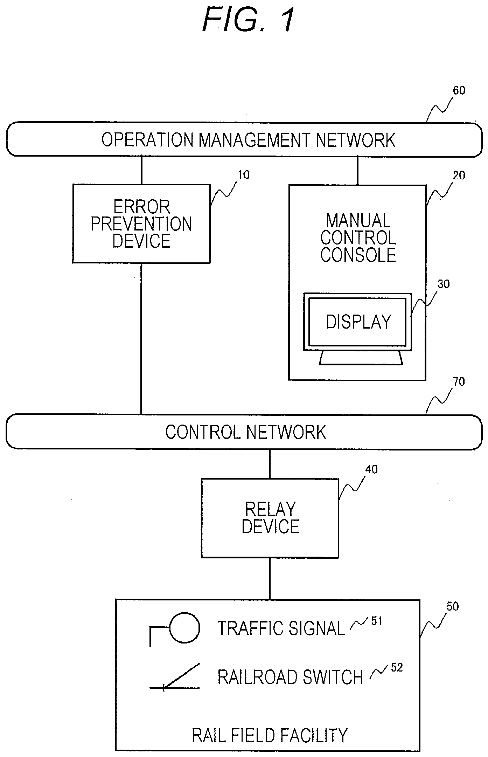

FIG. 1 is a block diagram illustrating an exemplary train operation control system according to an embodiment. The train operation control system according to this embodiment has an error prevention device 10 and a manual control console 20. The manual control console 20 is provided with a display 30. The error prevention device 10 cooperates with a relay device 40. The relay device 40 is connected to a rail field facility 50 such as a traffic signal 51 and a railroad switch 52. The error prevention device 10 controls the rail field facility 50 via the relay device 40. Note that FIG. 1 illustrates an example of this embodiment, and the invention is not limited thereto. Although the error prevention device 10, the manual control console 20, and the display 30 are illustrated separately by way of example in FIG. 1, they may also be integrated alternatively. In addition, any combination thereof may also be integrated.

First, an overview of the embodiment will be described.

The train operation control system is a system that controls a rail field facility of a railroad and enables a manual control of an operator. The train operation control system has a manual control console 20 that receives a manual manipulation and generates a control request for controlling the rail field facility 50 and an error prevention device 10 that checks whether or not there is an error in the control request and controls the rail field facility 50 via the relay device 40 on the basis of the control request if there is no error.

The error prevention device 10 stores information representing the check target control in advance. As a control request is received from the manual control console 20, the error prevention device 10 determines whether or not the control request requests the check target control. If the control request requests the check target control, confirmation of the control request is asked to the manual control console 20. The manual control console 20 stores, in advance, data of a confirmation screen format on which the control target facility and the control content can be set. As the confirmation of the control request is asked, a screen created by setting the control target facility and the control content of the control request in the confirmation screen format is displayed to prompt an operator to confirm the control request. As the confirmation is manipulated, a confirmation response is transmitted to the error prevention device 10. As the confirmation response is received, the error prevention device 10 controls the rail field facility 50 via the relay device 40 on the basis of the control request. As a result, it is determined whether or not the control request corresponds to the confirmation target by referring to information on the check target control stored by the error prevention device 10 in advance. In addition, the manual control console 20 allows an operator to perform confirmation using the confirmation screen format that does not depend on the control target or the control content. Therefore, it is possible to easily add or change the check target control only using the error prevention device 10.

The manual control console 20 displays a manipulation dialog box for displaying the control target facility and the control content when a manual manipulation is received. As the confirmation is asked from the error prevention device 10, a confirmation request dialog box for displaying the control target facility and the control content of the control request as a target of the confirmation is displayed overlappingly over the manipulation dialog box such that the control target facility and the control content of the manipulation dialog box are not hidden. As a result, the control target facility and the control content received through a manual manipulation and the control target facility and the control content of the control request received by the error prevention device 10 are displayed near each other. Therefore, an operator can easily visually recognize whether or not they match each other.

When the confirmation of the control request is asked to the manual control console 20, the error prevention device 10 records information on the control target facility and the control content contained in the control request message. As the confirmation is manipulated, the manual control console 20 transmits, to the error prevention device 10, a confirmation response message including the information on the control target facility and the control content of the control request. The error prevention device 10 receives the confirmation response message. If the control target facility and the control content recorded in advance and the control target facility and the control content contained in the confirmation response message match each other, the error prevention device 10 controls the rail field facility 50 on the basis of that control request. As a result, since it is checked whether or not the control request message and the corresponding confirmation response message match each other, it is possible to prevent an erroneous control caused by an error in communication between the manual control console 20 and the error prevention device 10.

A common format is used between the control target facility and the control content of the control request message and the control target facility and the control content of the confirmation response message. As a result, a comparison process of the error prevention device 10 is facilitated just by comparing target portions of the messages in the common format.

As the control request message is received from the manual control console 20, the error prevention device 10 determines whether or not this control request corresponds to the check target control by referring to the information representing the check target control stored in advance. If the control request does not correspond to the check target control, the rail field facility 50 is controlled on the basis of the control request via the relay device 40. If the control request corresponds to the check target control, a message for asking confirmation of the control request is created and transmitted to the manual control console 20. In addition, a confirmation response message responding to the message for asking the confirmation is received from the manual control console 20, and it is determined whether or not the confirmation response message represents allowance or cancellation. If the confirmation response message represents cancellation, the control request is cancelled. If the confirmation response message represents allowance, it is determined whether the confirmation response message is normal or abnormal. If the confirmation response message is abnormal, the control for the rail field facility 50 based on the control request is not performed. If the confirmation response message is normal, the control for the rail field facility 50 based on the control request is performed.

This embodiment will now be described in more details.

The error prevention device 10 receives information on the status of each rail field facility 50 from the relay device 40 via a control network 70 and transmits this information to the manual control console 20. In addition, the error prevention device 10 receives a control request for the manual control (manual control request) from the manual control console 20 via an operation management network 60 and performs various checks for the manual control request. If there is no error, the error prevention device 10 transmits the manual control request to the relay device 40 via the control network 70.

Information on the manual control request contains a facility type and a facility ID of the control target facility, a control type representing the control content, and an output type. The facility type is information regarding the type of the rail field facility 50. The facility ID is an identifier (ID) for uniquely identifying each facility type. The control type is a control content requested to the rail field facility 50. The output type is information for uniquely specifying an apparatus that requests the manual control.

The manual control console 20 displays the status of each rail field facility 50 on the display 30 to notify an operator. In addition, the manual control console 20 receives an input of the manual control from the display 30 by an operator and transmits a manual control request to the error prevention device 10 via the operation management network 60.

The relay device 40 controls the rail field facility 50 on the basis of the manual control request from the manual control console 20 received via the error prevention device 10.

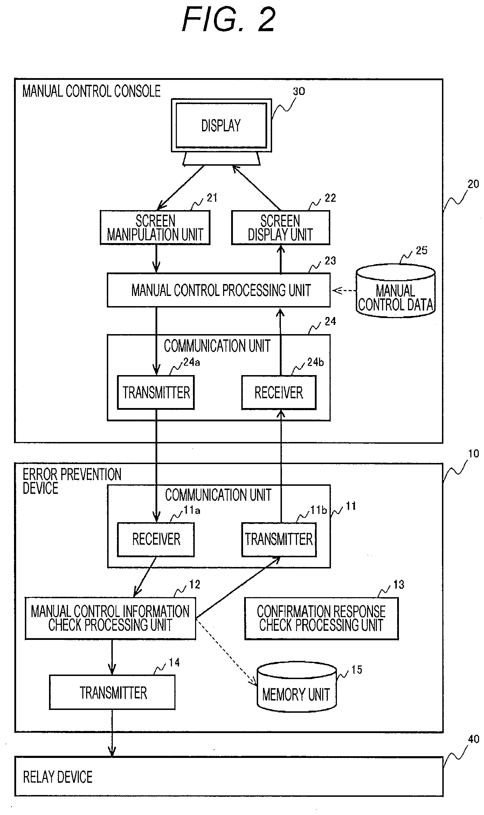

FIG. 2 is a block diagram illustrating the error prevention device and the manual control console.

The manual control console 20 has a screen manipulation unit 21, a screen display unit 22, a manual control processing unit 23, and a communication unit 24 and stores manual control data 25.

The screen manipulation unit 21 detects a manipulation, for example, on a touch panel type display 30 and transmits the manipulation data to the manual control processing unit 23.

The screen display unit 22 transmits the display data received from the manual control processing unit 23 to the display 30 to display the data.

The manual control processing unit 23 creates a manual control request message on the basis of the manipulation data received from the screen manipulation unit 21 and the manual control data 25 stored in advance and transmits the manual control request message to the communication unit 24. In addition, the manual control processing unit 23 creates screen display data for displaying a predetermined screen and transmits the screen display data to the screen display unit 22.

The communication unit 24 is a processing unit for transmitting and receiving messages between the manual control console 20 and the error prevention device 10 and has a transmitter 24a and a receiver 24b. The transmitter 24a transmits a message to the error prevention device 10, and receiver 24b receives a message from the error prevention device 10.

The manual control data 25 is data obtained by storing information on the control target facilities of the manual control in advance.

The error prevention device 10 has a communication unit 11, a manual control information check processing unit 12, a confirmation response check processing unit 13, a transmitter 14, and a memory unit 15.

The communication unit 11 is a processing unit for transmitting and receiving messages between the error prevention device 10 and the manual control console 20 and has a receiver 11a and a transmitter 11b. The receiver 11a receives a message from the manual control console 20, and the transmitter 11b transmits a message to the manual control console 20.

The manual control information check processing unit 12 determines whether or not there is a request for the confirmation on the manual control request received from the receiver 11a.

The confirmation response check processing 13 checks whether or not the confirmation response message received by the receiver 11a corresponds to the confirmation request message transmitted from the transmitter 11b. If the control target facility and the control content match between the confirmation request and the confirmation response, it can be determined that the confirmation request and the confirmation response correspond to each other.

The transmitter 14 transmits the manual control request to the relay device 40.

The memory unit 15 stores manual control request information in the confirmation request. The manual control request information contains information on the control target facilities and the control contents.

A series of processing flows regarding the manual control on the train operation control system according to this embodiment will be described with reference to FIGS. 2, 3, 4, 5, 6, and 7.

### <Flow until confirmation screen is displayed on display 30 starting from manual control request>

First, a processing flow when an operator performs a manual control request, and a confirmation screen responding to this request is displayed will be described with reference to FIGS. 2, 4, 6, and 7. In the block diagram of FIG. 2, a signal flow when an operator manipulates the manual control on the manual control console 20 is indicated by the arrows.

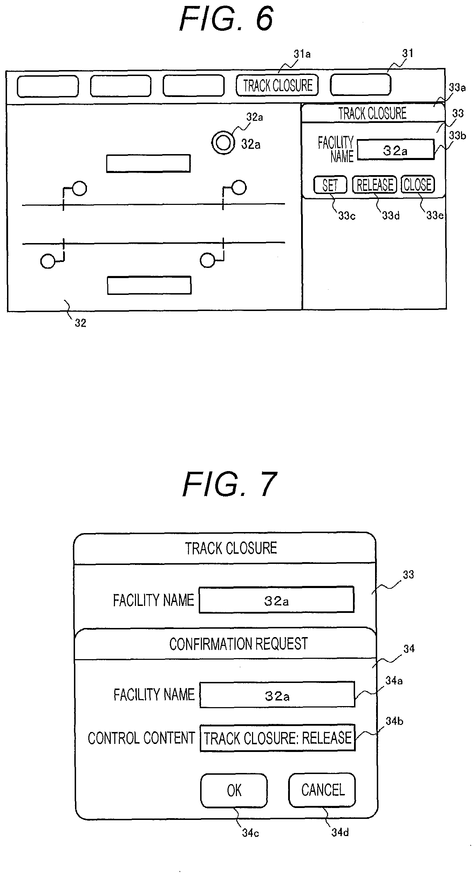

FIG. 6 is a diagram illustrating an exemplary manipulation screen for a manual control request displayed on the display 30. The element 31 is a menu area for buttons selected depending on a manipulation content. The element 32 is an area for displaying an operation status of the rail field facilities or trains. The element 33 is a manipulation dialog. The manipulation dialog includes a manipulation menu display portion 33a, a manipulated facility display portion 33b, a setting button 33c, a release button 33d, and a close button 33e.

A facility type of the control target facility that requests the manual control is displayed on the manipulation menu display portion 33a of the manual control console 20. In addition, a facility name of the manipulation target facility that requests the manual control is displayed on the manipulated facility display portion 33b of the manual control console 20. As an operator presses the setting button 33c, the manual control console 20 transmits a manual control request for requesting the corresponding facility to be set in the selected state. As the release button 33d is pressed, the manual control console 20 transmits a manual control request for requesting the corresponding control target facility to be released from the set state. As the close button 33e is pressed, the manual control console 20 discards the input information in the dialog box and deletes the manipulation dialog 33 from the screen.

A case where an operator releases rail track closure will be described by way of example.

As an operator selects a manipulation from the menu area 31 on the manipulation menu selection button of FIG. 6, a manipulation dialog 33 corresponding to the selected manipulation is displayed. Here, for example, a rail track closure button 31a is selected, and the manipulation dialog 33 for the rail track closure is displayed. The "rail track closure" is displayed on the manipulation menu display portion 33a of the manipulation dialog 33.

Then, an operator selects a target facility to be manipulated. Here, for example, a facility name 32a of the rail track is selected. The facility name 32a is displayed on the manipulated facility display portion 33b.

Finally, as an operator presses the release button 33d, a manual control for the facility 32a is requested. Here, for example, a manual control for releasing the rail track closure for the facility 32a is requested.

A control request for the manual control is transmitted from the screen manipulation unit 21 of the manual control console 20 to the manual control processing unit 23. The manual control processing unit 23 creates a manual control request message on the basis of the manual control data 25 and transmits it to the transmitter 24a. The message is transmitted from the transmitter 24a to the error prevention device 10.

The receiver 11a of the error prevention device 10 receives the manual control request message from the transmitter 24a. The receiver 11a transmits a content of the manual control request message to the manual control information check processing unit 12. The manual control information check processing unit 12 checks the content of the manual control request.

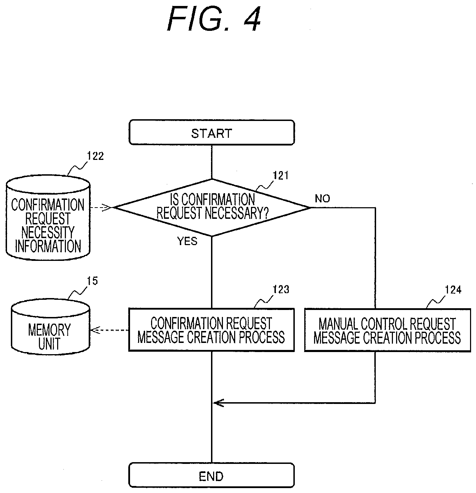

FIG. 4 is a flowchart illustrating a processing flow of the manual control information check processing unit.

Step 121: As a manual control request is received, the manual control information check processing unit 12 reads confirmation request necessity information 122 which is the information indicated by the check target control and determines whether or not this manual control necessitates confirmation.

The confirmation request necessity information 122 contains information on whether or not the confirmation is necessary for the corresponding manual control registered for each manual control. For example, the confirmation request necessity information 122 contains a facility type and a facility ID of the facility serving as a target of the manual control request, and information on whether or not the confirmation request is necessary in the unit of the control type representing the control content. By defining this confirmation request necessity information 122, it is possible to set necessity of confirmation for a manual control request of any facility type, facility ID, and control type.

If the confirmation request is necessary, the flow advances to a confirmation request message creation process (step 123). If the confirmation is not necessary, the flow advances to a manual control request message creation process (step 124).

Step 123: In the confirmation request message creation process (step 123), the manual control information check processing unit 12 creates a confirmation request message. The confirmation request message contains information such as the facility type, the facility ID, the control type, and the output type received from the manual control request. For this reason, the formats of the facility type, the facility ID, the control type, and the output type may be integrated between the manual control request message and the confirmation request message.

The manual control information check processing unit 12 records various types of information such as the facility type, the facility ID, the control type, and the output type of the created confirmation request message in the memory unit 15. After completing the record, the manual control information check processing unit 12 transmits the confirmation request message to the manual control console 20 via the transmitter 11b.

Step 124: In the manual control request message creation process (step 124), the manual control information check processing unit 12 transmits the manual control request message to the relay device 40 via the transmitter 14. The relay device 40 transmits the manual control request to the rail field facility 50 to control the rail field facility 50.

As the confirmation request message is received via the receiver 24b, the manual control processing unit 23 of the manual control console 20 creates display data of the confirmation request screen, transmits the display data to the screen display unit 22, and displays the confirmation request screen on the display 30. The confirmation request screen is a screen for prompting an operator to manipulate confirmation. The manual control console 20 creates the confirmation request screen by setting predetermined entries such as the control target facilities and the control contents in the confirmation screen format stored in advance.

FIG. 7 is a diagram illustrating an exemplary confirmation request screen displayed on the display 30. The manipulation dialog 33 of FIG. 7 is similar to that illustrated in FIG. 6. The element 34 is a confirmation request dialog. The facility name received in the confirmation request message is displayed on the confirmation manipulated facility display portion 34a. The facility type and the control type received in the confirmation request message are displayed on the confirmation manipulation type portion 34b.

As an operator presses an OK button 34c, the manual control console 20 performs a confirmation response for the corresponding facility. As an operator presses a CANCEL button, the confirmation for the corresponding facility is cancelled, and the confirmation request dialog 34 is deleted.

The confirmation request dialog 34 is displayed overlappingly under the manipulated facility display portion 33b of the manipulation dialog 33. If the display is performed in this manner, it is possible to reduce a risk of an error that may be generated during the confirmation by reducing an eye movement of an operator. In addition, since two types of information received on different messages of the manual control request and the confirmation request are displayed simultaneously on the manipulation dialog 33 and the confirmation request dialog 34, an operator can detect whether or not an error occurs on the operation management network 60.

The confirmation request dialog 34 is created by setting the control target facility and the control content in the confirmation screen format. Even when the manual control necessitating confirmation is changed, the confirmation screen format can be used without a change. That is, even when whether or not the confirmation request on the manipulation type is necessary is changed, correction can be performed just by changing the data of the confirmation request necessity information 122 of the error prevention device 10 without necessity of correcting the manual control console 20. Therefore, it is possible to reduce a software correction work hour. In addition, the manipulation dialogs of overall manual controls can be created through the same process, and they can be displayed on the same display and can be used regardless of the manipulation content.

### <Transmission of manual control from response to confirmation request of operator to relay device 40>

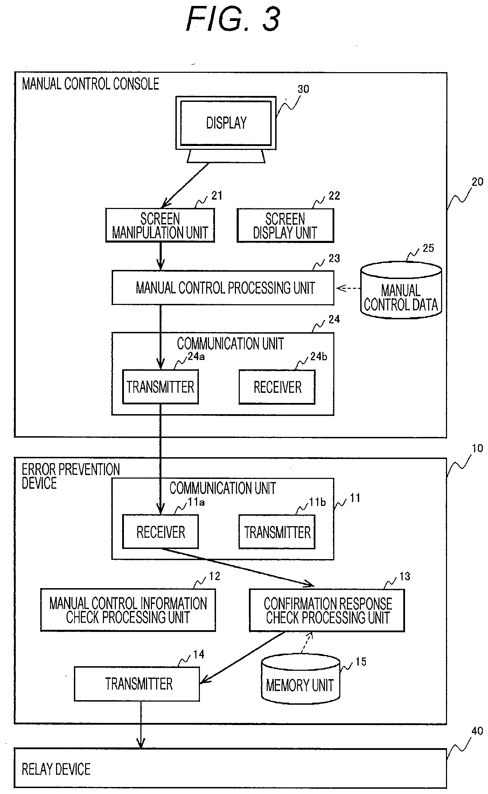

Next, a processing flow until an operator responds to the confirmation request, and the manual control is transmitted to the relay device 40 will be described with reference to FIGS. 3, 5, and 7.

FIG. 3 is a block diagram illustrating the error prevention device and the manual control console. The block diagram of FIG. 3 is similar to that of FIG. 2 . However, a signal flow when an operator responds to the confirmation from the manual control console 20 is indicated by the arrows.

An operator compares the information overlappingly displayed on the manipulation dialog 33 and the confirmation request dialog 34 as illustrated in FIG. 7. If they match each other and display the target and the content of the desired manual control, the operator determines that there is no problem and presses the OK button 34c to perform a confirmation response.

As the confirmation response is manipulated, a signal representing the confirmation response is transmitted from the screen manipulation unit 21 of the manual control console 20 to the manual control processing unit 23. As the confirmation response signal is received, the manual control processing unit 23 creates a confirmation response message on the basis of the information on the confirmation request received in advance and transmits the confirmation response message to the transmitter 24a. The message is transmitted from the transmitter 24a to the error prevention device 10.

The receiver 11a of the error prevention device 10 receives the confirmation response message and checks the confirmation response using the confirmation response check processing unit 13.

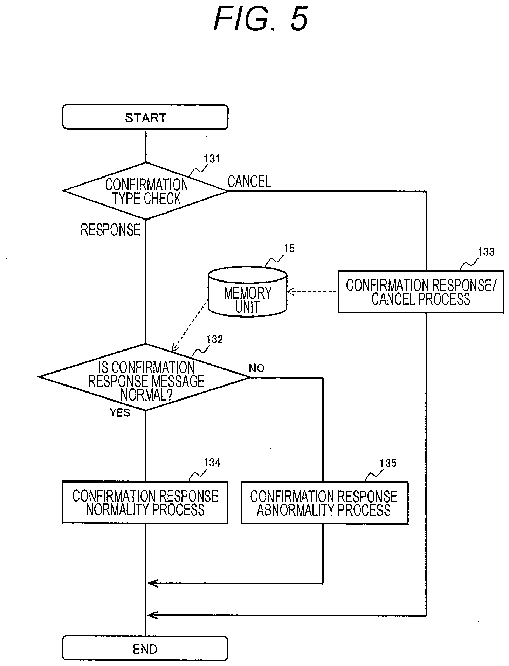

FIG. 5 is a flowchart illustrating a confirmation response check process.

Step 131: As the confirmation message is received, the confirmation response check processing unit 13 determines whether the message is a confirmation response message or a confirmation cancellation message. As illustrated in FIG. 7, according to this embodiment, the confirmation request dialog 34 has the OK button 34c and the CANCEL button 34d. When the operator presses the OK button 34c, the message corresponds to the confirmation response. When an operator presses the CANCEL button 34d, the message corresponds to the confirmation cancellation.

If the received message is the confirmation response message, the flow advances to the branching process of step 132. If the received massage is the confirmation cancellation message, the flow advances to the confirmation response cancellation process of step 133.

Step 132 : The confirmation response check processing unit 13 compares information of the received confirmation response message and information of the confirmation request message recorded in the memory unit 15 to determine whether or not they match each other. Information on the normal control target facility and the normal control content recorded when the confirmation request message is created is recorded in the memory unit 15. If the confirmation response message matches information of the confirmation request message stored in the memory unit 15, the flow advances to the confirmation response process (step 134). If they do not match each other, the flow advances to the confirmation response abnormality process (step 135). Here, by checking whether or not the received confirmation response message matches the information stored in the memory unit 15, it is possible to detect an erroneous message when an error occurs in the message while the message is transmitted via the operation management network 60.

Step 134: As a confirmation response normality process 134, the confirmation response check processing unit 13 creates a manual control request message on the basis of the information of the confirmation response message and transmits the manual control request message to the relay device 40 via the transmitter 14. The relay device 40 transmits a manual control request based on the received manual control request message to the rail field facility 50 to control the rail field facility 50.

In this manner, for a manipulation particularly necessitating a safety check, the manual control is performed when an operator performs the confirmation response. Therefore, when an operator requests an erroneous control, it is possible to prevent the erroneous control request from being directly applied.

Step 135: As a confirmation response abnormality process 135, the confirmation response check processing unit 13 creates a confirmation response abnormality message indicating that the confirmation response message is abnormal and transmits the confirmation response abnormality message to the manual control console 20 via the transmitter 11b. The manual control console 20 receives the confirmation response abnormality message via the receiver 24b and displays information indicating that abnormality occurs in the confirmation response on the display 30 via the manual control processing unit 23 and the screen display unit 22. An operator may determine a solution after watching indications on the display 30. For example, it may be conceived that whether or not a desired manual control is input is checked, and this manual control is then requested again.

A specific case where an operator presses the CANCEL button 34d on the confirmation request dialog 34 will be described. For example, on the display of FIG. 7, an operator compares the information displayed on the manipulation dialog 33 and the information displayed on the confirmation request dialog 34 to check whether or not there is a problem. If there is a problem, the operator presses the CANCEL button 34d to request cancellation of confirmation. Alternatively, on the display of FIG. 7, an operator checks whether or not there is an error in the control target facility or the control content. If there is an error, the operator presses the CANCEL button 34d to request cancellation of confirmation.

The confirmation cancellation message described above is processed in the same path as that of the confirmation response message, and the flow advances to the confirmation response cancellation process 133.

Step 133 : As a confirmation response cancellation process 133, the confirmation response check processing unit 13 deletes the corresponding confirmation request information from the memory unit 15.

While embodiments of the invention have been described hereinbefore, they are not intended to limit the scope of the invention. Instead, various modifications may be possible according to the invention. For example, although the embodiments described above have been described in details in order to facilitate understanding of the invention, it is not necessary to provide overall elements described above. Naturally, a part of the embodiment may be deleted or substituted with other configurations, and other configurations may also be added to the embodiments.

For example, in this embodiment, an operator checks whether or not the control target facility and the control content match between the control request screen and the confirmation screen while watching the screen of FIG. 7. However, the invention is not limited thereto. Alternatively, the manual control console 20 may check whether or not the control target facility and the control content match between the control request screen and the confirmation screen.

Each of the configurations, functions, processing units, and the like described above may be implemented partially or entirely by other configurations. In addition, each of the configurations, functions, and the like may be implemented as software by allowing a processor to analyze and implement a program capable of embodying each function. Information such as programs, tables, and files necessary to embody each function may be stored in a recording apparatus such as a memory, a hard disk, and a solid state drive (SSD) or a recording medium such as an integrated circuit (IC) card, a secure digital (SD) card, and a digital versatile disc (DVD).

### Reference Signs List

10 prevention device
11 communication unit
11a receiver
11b transmitter
12 manual control information check processing unit
122 confirmation request necessity information
13 confirmation response check processing unit
133 confirmation response cancellation process
134 confirmation response normality process
135 confirmation response abnormality process
14 transmitter
15 memory unit
20 manual control console
21 screen manipulation unit
22 screen display unit
23 manual control processing unit
24 communication unit
24a transmitter
24b receiver
25 manual control data
30 display
31 menu area
31a rail track closure button
32a facility name
32a facility name
33 manipulation dialog
33a manipulation menu display portion
33b manipulated facility display portion
33c setting button
33d release button
33e close button
34 confirmation request dialog
34a confirmation manipulated facility display portion
34b confirmation manipulation type portion
34c OK button
34d CANCEL button
40 relay device
50 rail field facility
51 traffic signal
52 railroad switch
60 operation management network
70 control network

## Claims

1. A train operation control system that controls a rail field facility of a railroad and allows an operator to perform a manual control, the train operation control system comprising:
a manual control device configured to receive a manual manipulation to create a control request for controlling the rail field facility; and
an error prevention device configured to check whether or not there is an error in the control request and controls the rail field facility on the basis of the control request in the case of no error,
wherein the error prevention device stores information representing a check target control in advance, determines whether or not the control request received from the manual control device requests the check target control, and asks confirmation of the control request to the manual control device if the control request requests the check target control,
the manual control device stores, in advance, data of a confirmation screen format on which a control target facility and a control content can be set, displays a screen created by setting the control target facility and the control content of the control request in the confirmation screen format to prompt the operator to perform a confirmation manipulation for the control request if the confirmation of the control request is asked, and transmits a confirmation response to the error prevention device as the confirmation manipulation is performed, and
the error prevention device controls the rail field facility on the basis of the control request as the confirmation response is received.

2. The train operation control system according to claim 1, wherein the manual control device displays a manipulation dialog box for displaying the control target facility and the control content when the manual manipulation is received, and a confirmation request dialog box for displaying the control target facility and the control content of the control request as a target of the confirmation is displayed overlappingly over the manipulation dialog box such that the control target facility and the control content of the manipulation dialog box are not hidden when the confirmation is asked from the error prevention device.

3. The train operation control system according to claim 1, wherein the error prevention device records information on the control target facility and the control content contained in a control request message for asking confirmation of the control request to the manual control device,
the manual control device transmits a confirmation response message including the information on the control target facility and the control content of the control request to the error prevention device as the confirmation is manipulated, and
the error prevention device receives the confirmation response message and controls the rail field facility on the basis of the control request if the control target facility and the control content stored in advance match the control target facility and the control content contained in the confirmation response message.

4. The train operation control system according to claim 3, wherein a common format is used between the control target facility and the control content of the control request message and the control target facility and the control content of the confirmation response message.

5. The train operation control system according to claim 1, wherein the error prevention device
determines whether or not a control request corresponds to the check target control by referring to information representing the check target control stored in advance as the control request message is received from the manual control device,
controls the rail field facility via a relay device on the basis of the control request if the control request does not correspond to the check target control,
creates a confirmation request message of the control request and transmits the confirmation request message to the manual control device if the control request corresponds to the check target control,
receives a confirmation response message responding to the confirmation request message from the manual control device,
determines whether the confirmation response message indicates allowance or cancellation,
cancel the control request if the confirmation response message indicates cancellation,
determines whether the confirmation response message is normal or abnormal if the confirmation response message indicates allowance,
skips the control of the rail field facility based on the control request if the confirmation response message is abnormal, and
performs the control of the rail field facility based on the control request if the confirmation response message is normal.

6. A railroad facility manual control method for manually controlling a rail field facility using a train operation control system having a manual control device configured to receive a manual manipulation and create a control request for controlling the rail field facility of a railroad, and an error prevention device configured to check whether or not there is an error in the control request and control the rail field facility on the basis of the control request if there is no error,
wherein the error prevention device stores information representing a check target control in advance,
the manual control device stores data on a confirmation screen format on which a control target facility and a control content can be set,
the error prevention device determines whether or not the control request requests the check target control as the control request is received from the manual control device and asks the manual control device to confirm the control request if the control request requests the check target control,
the manual control device displays a screen created by setting the control target facility and the control content of the control request in the confirmation screen format to prompt the operator to manipulate confirmation of the control request as the confirmation of the control request is asked, and transmits a confirmation response to the error prevention device as the confirmation is manipulated, and
the error prevention device controls the rail field facility on the basis of the control request as the confirmation response is received.

7. The railroad facility manual control method according to claim 6, wherein the manual control device displays a manipulation dialog box for displaying the control target facility and the control content when the manual manipulation is received, and a confirmation request dialog box for displaying the control target facility and the control content of the control request as a target of the confirmation is displayed overlappingly over the manipulation dialog box such that the control target facility and the control content of the manipulation dialog box are not hidden as the confirmation is asked from the error prevention device.

8. The railroad facility manual control method according to claim 6, wherein the error prevention device records information on the control target facility and the control content contained in the control request message when confirmation of the control request is asked to the manual control device,
the manual control device transmits a confirmation response message including information on the control target facility and the control content of the control request to the error prevention device as the confirmation is manipulated, and
the error prevention device receives the confirmation response message and controls the rail field facility on the basis of the control request if the control target facility and the control content recorded in advance and the control target facility and the control content contained in the confirmation response message match each other.

9. The railroad facility control method according to claim 8, wherein a common format is used between the control target facility and the control content of the control request message and the control target facility and the control content of the confirmation response message.

10. The railroad facility control method according to claim 6, the error prevention device
determines whether or not a control request corresponds to the check target control by referring to information representing the check target control stored in advance as the control request message is received from the manual control device,
controls the rail field facility via a relay device on the basis of the control request if the control request does not correspond to the check target control,
creates a confirmation request message of the control request and transmits the confirmation request message to the manual control device if the control request corresponds to the check target control,
receives a confirmation response message responding to the confirmation request message from the manual control device,
determines whether the confirmation response message indicates allowance or cancellation,
cancel the control request if the confirmation response message indicates cancellation,
determines whether the confirmation response message is normal or abnormal if the confirmation response message indicates allowance,
skips the control of the rail field facility based on the control request if the confirmation response message is abnormal, and
performs the control of the rail field facility based on the control request if the confirmation response message is normal.
